# EUROPÄISCHE PATENTSCHRIFT

(11) **EP 3 260 722 B1**
(45) Veröffentlichungstag und Bekanntmachung des Hinweises auf die Patenterteilung: **09.10.2024**
(21) Anmeldenummer: 17177596.8
(22) Anmeldetag: 23.06.2017
(51) Int. Cl.: F16D 59/02, F16D 65/18, F16D 121/22

(54) **BREMSE UND ANTRIEBSSYSTEM MIT BREMSE**
BRAKE AND DRIVE SYSTEM WITH BRAKE
FREIN ET SYSTÈME D'ENTRAÎNEMENT COMPRENANT UN FREIN

(30) Priorität: 24.06.2016 DE 202016003948 U
(43) Veröffentlichungstag der Anmeldung: 27.12.2017
(73) Patentinhaber: Kendrion INTORQ GmbH, 31855 Aerzen (DE)
(72) Erfinder: Neumann, Christopher, DE - 31171 Nordstemmen (DE)
(74) Vertreter: Westphal, Mussgnug & Partner Patentanwälte mbB

(56) Entgegenhaltungen:
- DE-A1- 102006 043 374
- DE-A1- 19 719 990
- DE-A1- 2 832 723
- DE-B3- 102013 219 878
- JP-A- S61 233 231
- US-A- 2 059 028
- US-A- 2 700 439
- US-A- 6 119 825

## Beschreibung

Die Erfindung betrifft ein Antriebssystem mit einer Bremse.

Bremsen der in Rede stehenden Art weisen regelmäßig ein Bremsengehäuse und einen Rotor auf. Bei derartigen Bremsen ist der Rotor in der Regel verdrehsteif mit der Welle eines Antriebs verbunden. Beim Schließen der Bremse wird der Rotor gegen das Bremsgegenelement und/oder das Bremsengehäuse gepresst. Hierdurch werden die für den Bremsvorgang benötigten Reibkräfte aufgebaut.

Um die Bremswirkung zu ermöglichen, muss die Bremse nicht nur über den Rotor verdrehsteif mit der Welle eines Antriebs ver-bunden sein, die Bremse muss darüber hinaus mit einem weiteren Element verbunden sein. Hierbei kann es sich um ein Teil des Antriebs, beispielsweise ein Antriebsgehäuse handeln. Wesentlich ist, dass es sich um ein Element handelt, relativ zu dem die Welle ihre Drehbewegung ausführt.

Dabei sind die Begriffe "Antrieb" und "Antriebssystem" im Zusammenhang mit der folgenden Erfindung zunächst so zu verstehen, dass es sich um Komponenten eines mechanischen Systems handelt, das der Übertragung mechanischer Bewegungsenergie mittels einer rotierenden Welle dient. Hierbei kann es sich um einen Elektromotor handeln, aber auch um ein Getriebe, einen Generator oder dergleichen.

Für diese in Rede stehende Verbindung der Bremse mit dem Antrieb werden nach dem Stand der Technik Verschraubungen verwendet. Dabei sind die Schrauben entweder in Gewindebohrungen der Bremse eingeschraubt oder durch Durchgangsbohrungen in Elementen der Bremse hindurchgeführt.

Nachteilig an derartigen Befestigungen ist, dass sie zu einem erhöhten Bauraumbedarf der Bremse führen. Dies liegt daran, dass die für eine hinreichend starke Verbindung benötigte Tiefe der Gewindebohrung hohe Materialstärken bedingt. Bei der Verwendung von Durchgangsbohrungen zur Befestigung der Bremse hingegen wird entsprechender zusätzlicher Bauraum für die Aufnahme von Muttern und/oder Schraubenköpfen oder dergleichen benötigt.

Aus der JP S61 233 231 A ist ein Antriebssystem mit einer Bremse mit den Merkmalen des Oberbegriffs des Anspruchs 1 bekannt. Weitere Antriebssysteme und zugehörige Bremsen offenbaren die US 6 1119 825 A, die DE 10 2013 219878 B3, die US 2 059 028 A, die DE 28 32 723, die US 2 700 439 A, die DE 197 19 990 A1 und die DE 10 2006 043374 A1.

Der Erfindung liegt die Aufgabe zugrunde, ein Antriebssystem mit einer Bremse zur Verfügung zu stellen, bei der die Bremse gegenüber dem Stand der Technik einen niedrigeren Bauraumbedarf und/oder niedrigere Materialstärken, insbesondere bei gleicher Leistungsfähigkeit, aufweist.

Die Aufgabe wird gelöst durch ein Antriebs-system mit den Merkmalen des unabhängigen Anspruchs 1. Die Merkmale der abhängigen Ansprüche betreffen vorteilhafte Ausführungsformen.

Erfindungsgemäß weist die Bremse des Antriebssystmes ein eingepresstes mit der Bremse verbundenes Befestigungselement zur Verbindung der Bremse mit dem Antrieb des Antriebssystems auf. Mit dem Befestigungselement ist die Bremse mit dem Antrieb unmittelbar verbunden.

Es hat sich gezeigt, dass bei der Verwendung solcher Befestigungselemente der Bauraumbedarf und damit Materialstärkenbedarf für die Verbindung des Befestigungselements mit der Bremse wesentlich niedriger ist als bei der Verwendung von herkömmlichen, beispielsweise in die Bremse eingeschraubten Befestigungselementen, wie Schrauben oder dergleichen.

Als stoffschlüssige Verbindung kommen insbesondere Schweißverbindungen in Betracht. Es sind auch kombinierte Verbindungen denkbar, bei denen eine stoffschlüssige Verbindung mit der Bremse einem in die Bremse eingepressten Befestigungselement zusätzlichen Halt verleiht.

Hierdurch wird es ermöglicht, die Materialstärken der Bremse im Bereich der Befestigungselemente zu reduzieren. Hierdurch wird insgesamt ein niedriger Bauraumbedarf geschaffen. Zudem bedingt die Verwendung geringerer Materialstärken auch geringere Materialkosten, was sich positiv auf die Wirtschaftlichkeit einer in Rede stehenden erfindungsgemäßen Bremse auswirkt.

Besonders vorteilhaft im Zusammenhang mit der vorliegenden Erfindung ist es, wenn die Bremse ein Bremselement umfasst, welches beim Schließen der Bremse den Rotor gegen das Bremsengehäuse oder das Bremsgegenelement presst.

Bei den Befestigungselementen kann es sich beispielsweise um Einpress-Gewindestifte handeln. Hierunter sind insbesondere Gewindestifte zu verstehen, die an ihrem einen Ende dazu ausgestaltet sind, in ein Bauteil eingepresst zu werden und an ihrem anderen Ende ein Außengewinde aufweisen. Dieses Außengewinde kann dann beispielsweise mit einer Mutter zusammenwirken, mit der der Einpress-Gewindestift lösbar mit dem Antrieb verbunden wird.

Nach einer weiteren vorteilhaften Ausführungsform kann es sich bei dem Befestigungselement auch um eine Einpress-Gewindebuchse handeln. Diese weist anstelle des Außengewindes des Einpress-Gewindestifts ein Innengewinde auf. Durch dieses kann sie beispielsweise durch das Einschrauben einer Schraube in das Innengewinde genutzt werden, um die Bremse vorzugsweise lösbar mit dem Antrieb zu verbinden.

Nach einer weiteren vorteilhaften Ausführungsform kann es sich auch um einen Einpressstift handeln. Ein derartiger Einpressstift wird dann mit dem Antrieb verbunden, indem er derart in eine Bohrung des Antriebs eingeführt wird, dass ein Presssitz zwischen dem Einpressstift und dem Antrieb erzeugt wird. Hierfür kann es vorteilhaft sein, wenn der Einpressstift eine hierfür vorteilhafte Oberflächenstruktur aufweist. Diese kann vorzugsweise sogenannte Sperrrillen umfassen, die sich vorteilhaft auf den Presssitz auswirken. Insbesondere ermöglichen derartige Sperrrillen einen festeren Sitz des Einpressstiftes in der Bohrung des Antriebs bei vergleichsweise niedrigeren Kräften zum Einführen des Einpressstiftes in die Bohrung des Antriebs.

Besonders vorteilhaft ist die vorliegende Erfindung im Zusammenhang mit Bremsen, die als Bremsengehäuse einen Magnetkörper aufweisen. Dies ist insbesondere bei elektromagnetisch betätigten Bremsen, wie elektromagnetisch lüftenden Federkraftbremsen oder Permanentmagnetbremsen der Fall. Ein solcher Magnetkörper wird regelmäßig derart gestaltet, dass der elektromagnetische Fluss durch den Magnetkörper in einer für die Funktion der Bremse vorteilhaften Weise beeinflusst wird. Durch den geringeren Bauraumbedarf ermöglicht die erfindungsgemäße Bremse eine freiere Gestaltung des Magnetkörpers und damit eine bessere Anpassung an die magnetischen Erfordernisse.

Erfindungsgemäß ist entweder das Befestigungselement mit dem Bremsengehäuse der Bremse verbunden ist, wobei die Verbindung des Befestigungselements mit dem Bremsengehäuse dabei durch Einpressen des Befestigungselements in das Bremsengehäuse erfolgt, oder das Befestigungselement mit dem Bremsgegenelement der Bremse, bei dem es sich um einen Flansch handelt, verbunden ist, indem es in eine Durchgangsbohrung des Flansches eingepresst ist. Bei dem Bremsgegenelement, bei dem es sich um einen Flansch handelt, werden regelmäßig Reibbeläge zum Aufbau der nötigen Reibkräfte zwi-schen Bremsgegenelement und Rotor verwendet. Die erfindungsgemäß vorgesehenen Befestigungselemente wirken sich dabei weniger störend im Bereich der Reibpaarung aus als herkömmliche Verbindungselemente.

Erfindungsgemäß werden die Befestigungselemente in Durchgangsbohrungen eingebracht. Das Einbringen der Befestigungselemente in Durchgangsbohrungen ermöglicht insbesondere die Verwendung von Befestigungselementen, die an ihrem mit der Bremse verbundenen Ende eine Verdickung aufweisen. Diese können dann in vorteilhafter Weise aus Richtung eines Aufnahmeraums für das Betätigungselement der Bremse in die Durchgangsbohrung eingebracht werden. Dies ist insbesondere dann vorteilhaft, wenn die Verbindungselemente mit dem Bremsengehäuse verbunden werden. Werden die Verbindungselemente mit dem Bremsgegenelement verbunden, so ist es besonders vorteilhaft, wenn diese aus Richtung des Rotors bzw. der Reibbeläge in die Durchgangsbohrung im Bremsgegenelement eingebracht werden.

Besonders bevorzugt weisen die Befestigungselemente eine Oberflächenstrukturierung auf, diese ist vorzugsweise derart gestaltet, dass sie beim Einpressen des Verbindungselements in das Material der Bremse zu einer plastischen Verformung des Materials der Bremse führt. Durch diese plastische Verformung wird insbesondere eine, insbesondere formschlüssige, verzahnungsartige Verbindung zwischen dem Material der Bremse und dem Befestigungselement erzeugt. Dies dient insbesondere dazu, ein Verdrehen des Befestigungselements in seinem Presssitz in der Bremse zu verhindern. Dies ist insbesondere dann vorteilhaft, wenn beispielsweise beim Verbinden des Befestigungselements mit dem Antrieb durch einen Schraubvorgang Drehmomente in das Befestigungselement eingeleitet werden.

Bei dem erfindungsgemäßen Antriebssystem ist eine erfindungsgemäße Bremse mit einem Antrieb verbunden. Das Befestigungselement verbindet dabei, insbesondere direkt, das Bremsgehäuse mit dem Antrieb.

Bei dem Antrieb kann es sich beispielsweise um einen Elektromotor handeln. Nach einer bevorzugten Ausführungsform ist dann die Bremse mit dem Motorlagerschild eines solchen Elektromotors verbunden. Dies ermöglicht eine kompakte Bauweise eines entsprechenden Bremsmotors.

Wenn es sich bei dem Antriebssystem um einen Generator, beispielsweise in einer Windenergieanlage, handelt, so kann die erfindungsgemäße Bremse in ebenfalls vorteilhafter Weise mit einem in seiner Funktion einem Motorlagerschild entsprechenden Gehäuseteil des Antriebs verbunden sein.

Besonders vorteilhaft können erfindungsgemäße Antriebssysteme Bestandteil von Werkzeugmaschinen, Windenergieanlagen, Aufzügen, Flurförderzeugen, Industrie-robotern oder Regalbediengeräten sein. Insbesondere bei diesen Vorrichtungen bestehen hohe Anforderungen an die Leistungen der Bremse und deren mechanische Belastbarkeit, so dass sich hier die Material- und/oder Bauraumersparnis der vorliegenden Erfindung besonders vorteilhaft auswirkt.

Die Erfindung wird im Folgenden anhand der Figuren 1 bis 4 schematisch näher erläutert.
**Fig. 1** zeigt eine beispielhafte Bremse, deren Bremsengehäuse mit Gewindestiften mit dem Antrieb verbunden ist.
**Fig. 2** zeigt eine beispielhafte Bremse, deren Bremsengehäuse mit Gewindebuchsen mit dem Antrieb ver-bunden ist.
**Fig. 3** zeigt eine beispielhafte Bremse, deren Bremsgegenelement mit Einpressstiften mit dem Antrieb verbunden ist.
**Fig. 4** zeigt eine beispielhafte Bremse, deren Bremsgegenelement mit Einpress-Gewindestiften mit dem Antrieb verbunden ist.
**Fig. 5** zeigt eine beispielhafte Bremse, deren Bremsengehäuse mit angeschweißten Gewindestiften mit dem Antrieb verbunden ist.
**Fig. 6** zeigt eine beispielhafte Bremse, deren Bremsengehäuse mit angeschweißten Gewindestiften mit dem Antrieb verbunden ist, in einer alternativen Ausgestal-tung.

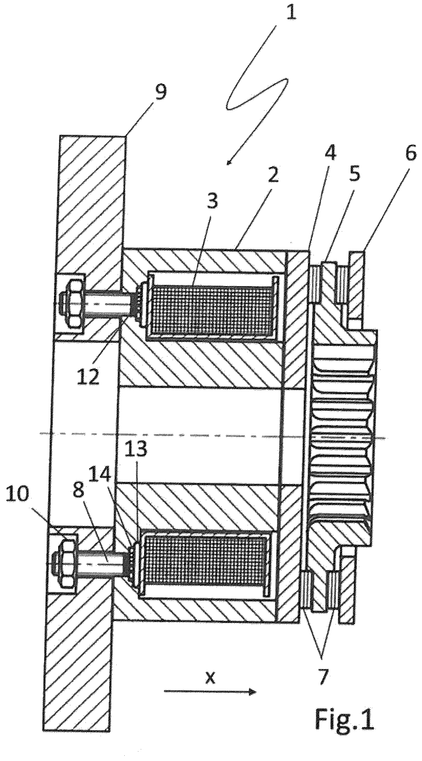

Die in den Fig. 1 bis 6 dargestellten Bremsen 1 weisen jeweils ein Bremsengehäuse 2 auf. In den gezeigten Beispielen ist in den Bremsengehäusen 2 jeweils ein Betätigungselement 3 angeordnet. Bei den beispielhaften Bremsen 1 handelt es sich bevorzugt um Elektromagnete. Diese können insbesondere durch die Verwendung von Vergussmassen in den Bremsengehäusen 2 befestigt sein.

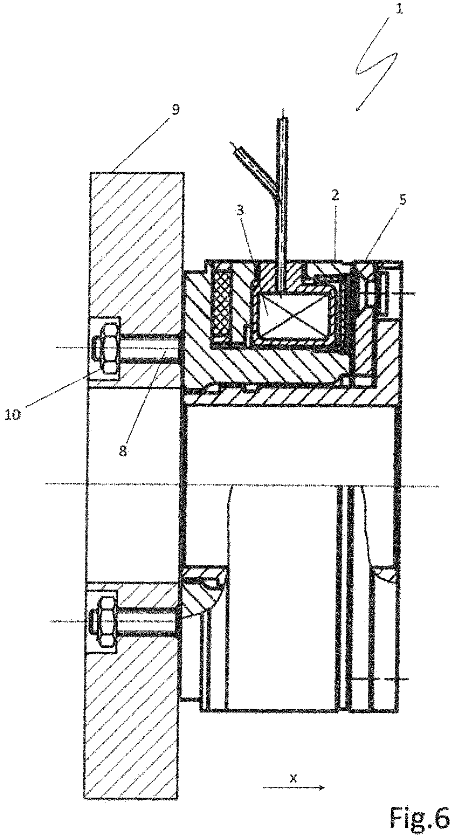

Die Betätigungselemente 3 wirken im Fall der in den Fig. 1 bis 5 gezeigten Bremsen auf Bremselemente 4, die bei den gezeigten Ausführungsbeispielen in vorteilhafter Weise als insbesondere in axialer Richtung X bewegliche Ankerscheiben ausgeführt sind. Hierbei entspricht die Definition der axialen Richtung X der einer zur Drehachse mit der Bremse 1 verbundenen Welle parallelen Richtung. Im Fall der in Fig. 6 gezeigten Bremse wirken die Betätigungselemente 3 bevorzugt auf den Rotor 5. Es handelt sich bei der in der Fig. 6 dargestellten Bremse 1 vorzugsweise um eine Permanentmagnetbremse.

Zur Verbindung der Bremse 1 mit der Welle weist der Rotor 5 eine entsprechende, zur Übertragung von Drehmomenten geeignete Wellen-Naben-Verbindung, wie beispielsweise eine Verzahnung, auf. Beim Schließen der in den Fig. 1 bis 5 dargestellten beispielhaften Bremse 1 wird der Rotor 5 durch das Bremselement 4 gegen das jeweilige Bremsgegenelement 6 gepresst. Das Bremsgegenelement 6 ist in den beispielhaften Bremsen bevorzugt als Flansch ausgebildet. Beim Anpressen des Rotors 5 gegen das Bremsgegenelement 6 durch das Bremselement 4 werden die zum Bremsen nötigen Reibkräfte zwischen Reibbelägen 7, die am Bremselement 4, Rotor 5 und/oder Bremsgegenelement 6 angeordnet sind, erzeugt. Im Fall der in der Fig. 6 dargestellten Bremse 1 wird der Rotor 5 gegen das Bremsengehäuse 2 gepresst, um die benötigten Reibkräfte zu erzeugen.

Die dargestellten Bremsen 1 sind jeweils in bevorzugter Weise durch eine Mehrzahl Befestigungselemente 8 mit einem Antriebsteil 9, bei dem es sich beispielsweise um ein Motorlagerschild handeln kann, verbunden.

Bei dem in der Fig. 1 dargestellten Ausführungsbeispiel handelt es sich bei den Befestigungselementen 8 um Einpress-Gewindestifte. Diese sind mit Muttern 10 mit dem Antriebsteil 9 verschraubt.

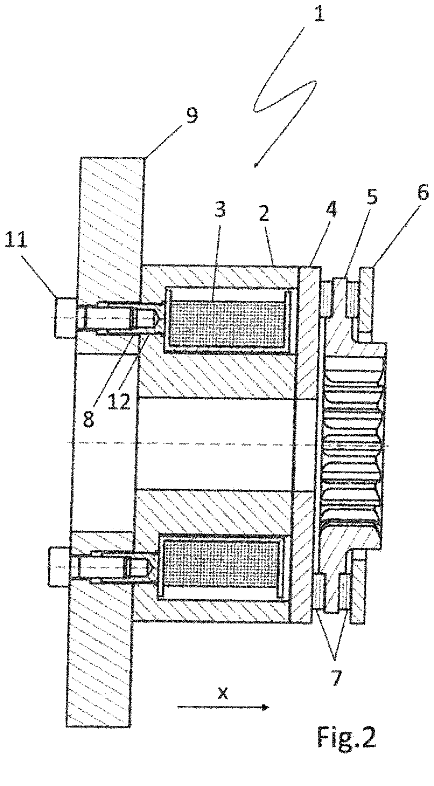

Bei dem in Fig. 2 gezeigten Ausführungsbeispiel handelt es sich hingegen bei den Befestigungselementen 8 um Einpress-Gewindebuchsen. Die Einpress-Gewindebuchsen sind mittels Schrauben 11 mit dem Antriebsteil 9 verbunden.

Bei den in den Fig. 1 und 2 gezeigten Ausführungsbeispielen sind die Befestigungselemente 8 in Durchgangsbohrungen 12 im Bremsengehäuse eingebracht. In vorteilhafter Weise geschieht das Einbringen der Befestigungselemente 8 aus der Richtung des Aufnahmeraumes für das Betätigungselement 3 im Bremsengehäuse 2. Bei der Montage der Bremse kann so zunächst das Einbringen der Befestigungselemente 8 durch Einpressen in das Bremsengehäuse 2 erfolgen, in späteren Fertigungsschritten wird dann das Betätigungselement 3 in seinen entsprechenden Aufnahmeraum eingebracht und dort beispielsweise durch das Vergießen mit Vergussmasse befestigt. Ein besonderer Vorteil erfindungsgemäßer Bremsen 1 ist es in diesem Zusammenhang, dass bei dem Vergießen nicht zuvor eine Bohrung gegen das Eindringen der Vergussmasse abgedichtet werden muss, wie es beispielsweise der Fall ist, wenn Durchgangs-Gewindebohrungen im Bremsengehäuse 2 in dem Aufnahmeraum für das Betätigungselement 3 enden.

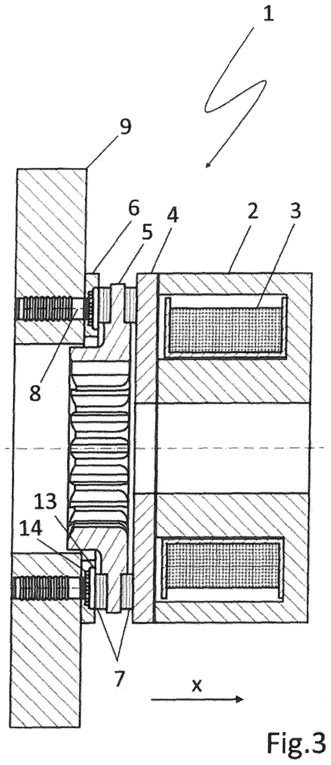

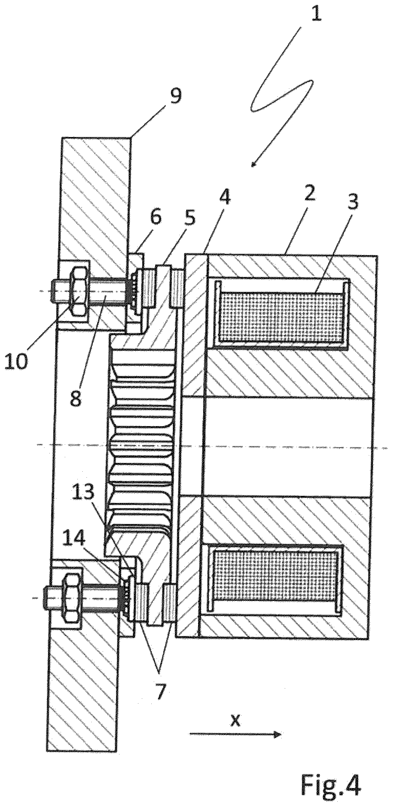

Bei den in den Fig. 3 und 4 dargestellten beispielhaften Bremsen 1 sind die beispielhaften Durchgangsbohrungen 12 für die Befestigungselemente 8 in den Bremsgegenelementen 6 vorgesehen. Bei der Fertigung dieser Bremsgegenelemente 6 können in vorteilhafter Weise zunächst die Befestigungselemente 8 in die Bremsgegenelemente 6 eingebracht bzw. eingepresst werden, woraufhin in späteren Fertigungsschritten die Reibbeläge 7 an die Befestigungselemente 6 angebracht werden.

Bei den in den Fig. 1 bis 4 gezeigten Bremsen 1 weisen die Befestigungselemente 8 in vorteilhafter Weise Verdickungen 13 an ihren mit der Bremse 1 verbundenen Enden auf. Dies wirkt sich positiv auf die Verbindung der Be-festigungselemente 8 mit der Bremse 1 aus, insbesondere dann, wenn Zugkräfte über die Befestigungselemente 8 übertragen werden, wie es bei den dargestellten Befestigungselementen 8 der Fall ist.

Dabei weisen die in den Ausführungsbeispielen dargestellten Befestigungselemente 8 in vorteilhafter Weise Oberflächenstrukturierungen 14 auf. Diese sind insbesondere im Bereich der Verdickungen 13 angeordnet und verursachen beim Einpressen der Befestigungselemente 8 in die Bremsen 1 eine plastische Verformung des Materials der Bremse 1. Diese dient insbesondere dazu, die Befestigungselemente 8 gegen ein Verdrehen in ihrem Presssitz zu sichern, indem sich durch die plastische Verformung des Materials der Bremse 1 eine Art Verzahnung zwischen dem Material der Bremse 1 und dem jeweiligen Befestigungselement 8 ausbildet.

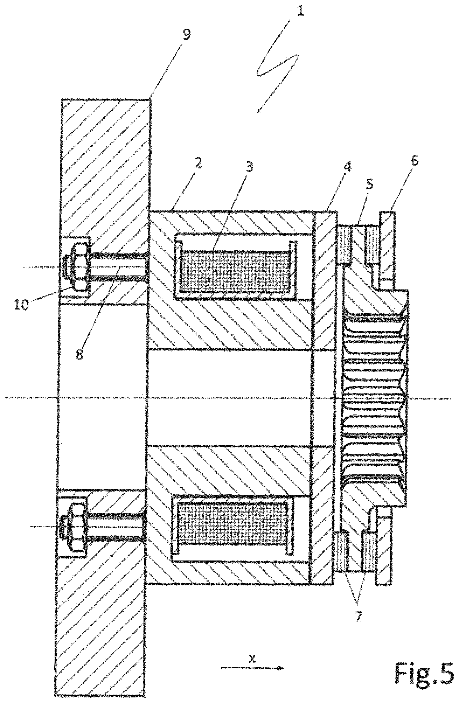

Bei den in den Fig. 5 und 6 dargestellten Bremsen 1 sind die Befestigungselemente 8 stoffschlüssig, im gezeigten Beispiel durch eine Verschweißung, mit der Bremse verbunden.

### Bezugszeichen:

- 1: Bremse
- 2: Bremsengehäuse
- 3: Betätigungselement
- 4: Bremselement
- 5: Rotor
- 6: Bremsgegenelement
- 7: Reibbeläge
- 8: Befestigungselement
- 9: Antriebsteil
- 10: Muttern
- 11: Schrauben
- 12: Durchgangsbohrungen
- 13: Verdickung
- 14: Oberflächenstrukturierung

- X: axiale Richtung

## Patentansprüche

1. Antriebssystem mit einem Antrieb und einer Bremse (1), mit einem Bremsengehäuse (2) und einem Rotor (5) zur verdrehsteifen Verbindung mit einer Welle eines Antriebs, wobei in dem Bremsengehäuse (2) ein Betätigungselement (3) zum Betätigen der Bremse (1) angeordnet ist, wobei beim Schließen der Bremse (1) der Rotor (5) gegen das Bremsengehäuse (2) oder ein Bremsgegenelement (6) gepresst wird, wobei die Bremse (1) ein eingepresstes Befestigungselement (8) aufweist, welches die Bremse (1) unmittelbar mit dem Antrieb verbindet,
**dadurch gekennzeichnet,**
**dass** entweder das Befestigungselement (8) mit dem Bremsengehäuse (2) der Bremse (1) verbunden ist, wobei das Befestigungselement (8) in eine Durchgangsbohrung (12) des Bremsengehäuses (2), die in einem Aufnahmeraum für das Betätigungselement (3) endet, eingepresst, ist, oder dass das Bremsgegenelement (6) ein Flansch ist und dass das Befestigungselement (8) mit dem Bremsgegenelement (6) der Bremse (1) verbunden, ist, indem das Befestigungselement (8) in eine Durchgangsbohrung (13) des Flansches eingepresst ist.

2. Antriebssystem nach Anspruch 1,
**dadurch gekennzeichnet,**
**dass** die Bremse ein Bremselement (4) aufweist, das beim Schließen der Bremse den Rotor (5) gegen das Bremsgegenelement (6) oder das Bremsengehäuse (2) presst.

3. Antriebssystem nach Anspruch 1 oder 2,
**dadurch gekennzeichnet,**
**dass** das Befestigungselement (8) ein Einpress-Gewindestift ist.

4. Antriebssystem nach Anspruch 1 oder 2,
**dadurch gekennzeichnet,**
**dass** das Befestigungselement (8) eine Einpress-Gewindebuchse ist.

5. Antriebssystem nach Anspruch 1 oder 2,
**dadurch gekennzeichnet,**
**dass** das Befestigungselement (8) ein Einpressstift, insbesondere ein Einpressstift mit Sperrrillen ist.

6. Antriebssystem nach einem der vorigen Ansprüche,
**dadurch gekennzeichnet,**
**dass** die Bremse (1) als Bremsengehäuse (2) einen Magnetkörper aufweist.

7. Antriebssystem nach einem der vorigen Ansprüche,
**dadurch gekennzeichnet,**
**dass** die Bremse (1) eine Mehrzahl eingepresste Befestigungselemente (8) zur Verbindung der Bremse (1) mit dem Antrieb aufweist.

8. Antriebssystem nach einem der vorigen Ansprüche,
**dadurch gekennzeichnet,**
**dass** es sich um eine elektromagnetisch betätigbare Bremse (1) handelt.

9. Antriebssystem nach einem der vorigen Ansprüche,
**dadurch gekennzeichnet,**
**dass** das Befestigungselement (8), insbesondere im Bereich seines mit der Bremse (1) verbundenen Endes, eine Verdickung aufweist.

10. Antriebssystem nach einem der vorigen Ansprüche,
**dadurch gekennzeichnet,**
**dass** das Befestigungselement (8), insbesondere im Bereich seiner Verdickung (13), eine Oberflächenstrukturierung (14) aufweist.

11. Antriebssystem nach einem der vorigen Ansprüche,
**dadurch gekennzeichnet,**
**dass** die Bremse (1) mit einem Motorlagerschild des Antriebs verbunden ist.

12. Antriebssystem nach Anspruch 11,
**dadurch gekennzeichnet,**
**dass** es sich um ein Antriebssystem einer Werkzeugmaschine, einer Windenergieanlage, eines Aufzugs, eines Flurförderzeugs, eines Industrieroboters oder eines Regalbediengerätes handelt.

## Claims

1. Drive system with a drive and a brake (1), having a brake housing (2) and a rotor (5) for the torsionally rigid connecting to a shaft of a drive, wherein an activating element (3) for activating the brake (1) is arranged in the brake housing (2), wherein, when the brake (1) is closed, the rotor (5) is pressed against the brake housing (2) or against a brake counter element (6), wherein the brake (1) comprises a press fit attachment element (8) which directly connects the brake (1) to the drive,
**characterized in that**
either the attachment element (8) is connected to the brake housing (2), wherein the attachment element (8) is pressed into a through bore (12) of the brake housing (2) which ends in a receiving space for the attachment element, or the brake counter element (6) is a flange and **in that** the attachment element (8) is connected to the brake counter element (6) of the brake (1) by the attachment element (8) being pressed into a through bore (13) of the flange.

2. Drive system in accordance with claim 1,
**characterized in that**
the brake comprises a braking element (4) which, when the brake is closed, presses the rotor (5) against the brake counter element (6) or against the brake housing (2).

3. Drive system in accordance with claim 1 or 2,
**characterized in that**
the attachment element (8) is a press fit threaded pin.

4. Drive system in accordance with claim 1 or 2,
**characterized in that**
the attachment element (8) is a press fit threaded socket.

5. Drive system in accordance with claim 1 or 2,
**characterized in that**
the attachment element (8) is a press fit pin, in particular a press fit pin having locking flutes.

6. Drive system in accordance with any of the preceding claims,
**characterized in that**
the brake (1) comprises a magnetic body as brake housing (2).

7. Drive system in accordance with any of the preceding claims,
**characterized in that**
the brake (1) comprises a plurality of press fit attachment elements (8) for connecting the brake (1) to the drive.

8. Drive system in accordance with any of the preceding claims,
**characterized in that**
the brake (1) is electromagnetically operable.

9. Drive system in accordance with any of the preceding claims,
**characterized in that**
the attachment element (8) comprises, in particular in the region of its end which is connected to the brake (1), a thicker section.

10. Drive system in accordance with any of the preceding claims,
**characterized in that**
the attachment element (8) comprises, in particular in the region of its thicker section (13), a surface structuring (14).

11. Drive system in accordance with any of the preceding claims,
**characterized in that**
the brake (1) is connected to a motor bearing plate of the drive.

12. Drive system in accordance with claim 11,
**characterized in that**
it is a drive system of a machine tool, a wind power plant, an elevator, an industrial truck, an industrial robot or of a storage and retrieval apparatus.

## Revendications

1. Système d'entraînement comprenant :
- un entraînement et un frein (1), un boîtier de frein (2) et un rotor (5) pour la liaison rigide en torsion avec un arbre d'un entraînement,
- un élément d'actionnement (3) pour actionner le frein (1) étant logé dans le boîtier de frein (2),
- au serrage du frein (1), le rotor (5) est pressé contre le boîtier de frein (2) ou sur un contre-élément de frein (6),
- le frein (1) a un élément de fixation (8) enfoncé reliant le frein (1) directement à l'entrainement,
système **caractérisé en ce que**
- l'élément de fixation (8) est relié au boîtier (2) du frein (1),
* l'élément de fixation (8) étant enfoncé dans un perçage traversant (12) du boîtier de frein (2) qui se termine dans la cavité de réception de l'élément d'actionnement (3), ou
- le contre-élément de frein (6) est une bride et l'élément de fixation (8) est relié au contre-élément (6) du frein (1) **en ce que** l'élément de fixation (8) est enfoncé dans un perçage traversant (13) de la bride.

2. Système d'entraînement selon la revendication 1,
**caractérisé en ce que**
le frein comporte un élément de frein (4) qui, à la fermeture du frein, presse le rotor (5) sur le contre-élément de frein (6) ou sur le boîtier de frein (2).

3. Système d'entraînement selon la revendication 1 ou 2,
**caractérisé en ce que**
l'élément de fixation (8) est une vis sans tête à sertir.

4. Système d'entraînement selon la revendication 1 ou 2,
**caractérisé en ce que**
l'élément de fixation (8) est une douille filetée à sertir.

5. Système d'entraînement selon la revendication 1 ou 2,
**caractérisé en ce que**
l'élément de fixation (8) est une vis sans tête à sertir notamment une vis sans tête à sertir avec des rainures.

6. Système d'entraînement selon l'une des revendications précédentes, **caractérisé en ce que**
le frein (1) comporte un corps magnétique comme boîtier de frein (2).

7. Système d'entraînement selon l'une des revendications précédentes, **caractérisé en ce que**
le frein (1) comporte plusieurs éléments de fixation enfoncés (8) pour relier le frein (1) à l'entraînement.

8. Système d'entraînement selon l'une des revendications précédentes, **caractérisé en ce que**
le frein (1) est un frein à commande électromagnétique.

9. Système d'entraînement selon l'une des revendications précédentes, **caractérisé en ce que**
l'élément de fixation (8) a une surépaisseur notamment dans la zone de son extrémité reliée au frein (1).

10. Système d'entraînement selon l'une des revendications précédentes, **caractérisé en ce que**
l'élément de fixation (8) présente une structure de surface (14) notamment dans la zone de son renforcement (13).

11. Système d'entraînement selon l'une des revendications précédentes, **caractérisé en ce que**
le frein (1) est relié à un flasque de moteur.

12. Système d'entraînement selon la revendication 11,
**caractérisé en ce que**
le système d'entraînement est une machine-outil, une éolienne, un ascenseur, un chariot transporteur, un robot industriel ou un appareil de magasinage.
